# EUROPÄISCHE PATENTSCHRIFT

(11) **EP 4 164 049 B1**
(45) Veröffentlichungstag und Bekanntmachung des Hinweises auf die Patenterteilung: **06.05.2026**
(21) Anmeldenummer: 21201169.6
(22) Anmeldetag: 06.10.2021
(51) Int. Cl.: H01M 50/531, H01M 50/533, H01M 50/538, H01M 50/54

(54) **ENERGIESPEICHERELEMENT UND HERSTELLUNGSVERFAHREN**
ENERGY STORAGE ELEMENT AND METHOD OF MANUFACTURING SAME
ÉLÉMENT D'ACCUMULATEUR D'ÉNERGIE ET PROCÉDÉ DE FABRICATION

(43) Veröffentlichungstag der Anmeldung: 12.04.2023
(73) Patentinhaber: VARTA Microbattery GmbH, 73479 Ellwangen Jagst (DE)
(72) Erfinder: Elmer, Martin, 73479 Ellwangen (DE); Soldner, Andreas, 91550 Dinkelsbühl (DE); Stern, Rainer, 73479 Ellwangen (DE)
(74) Vertreter: Ostertag & Partner Patentanwälte mbB

(56) Entgegenhaltungen:
- EP-B1- 2 324 530
- JP-A- 2011 171 303
- US-A1- 2009 017 376

## Beschreibung

Die Erfindung betrifft ein Energiespeicherelement, das sich zur Bereitstellung sehr hoher Ströme eignet, sowie ein Verfahren zur Herstellung eines solchen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. Alternativ kann es sich bei dem Verbundkörper auch um einen Stapel aus Elektroden handeln.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

In der WO 2017/215900 A1 sind zylindrische Rundzellen beschrieben, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle Kontaktplatten auf, die auf den Stirnseiten des Wickels aufsitzen und mit den Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Potentiell problematisch ist hierbei, dass die Ränder der Stromkollektoren beim Aufbringen der Kontaktplatten oft unkontrolliert gestaucht werden, woraus undefinierte Faltungen resultieren können. Ein großflächiger, formschlüssiger Kontakt zwischen den Stirnseiten und den Kontaktplatten wird dadurch erschwert. Zudem erhöht sich die Gefahr von stirnseitigen Fein- oder Kurzschlüssen, etwa in Folge einer Beschädigung des zwischen den Elektroden angeordneten Separators.

Zur Lösung dieses Problems wird in der WO 2020/096973 A1 vorgeschlagen, die Ränder der Stromkollektoren vorzubehandeln, insbesondere Teile der Stromkollektorränder zu entfernen, so dass sie rechteckförmig ausgebildet sind.

Eine gezielte Vorverformung der Ränder von Stromkollektoren ist aus der US 2018/0190962 A1 und aus der JP 2015-149499 A bekannt.

Diese bekannten Lösungen haben den Nachteil, dass die Vorbehandlung der Stromkollektorränder sehr aufwendig ist.

Weiterhin ist eine Vorverformung der Ränder von Stromkollektoren aus der EP 2324530 B1 bekannt.

Aus der US 2009/0017376 A1 sind Pouch-Zellen bekannt, die Elektroden mit umgeformten Stromkollektorrändern aufweisen können.

### AUFGABE UND LÖSUNG

Demgegenüber lag der vorliegenden Erfindung die Aufgabe zugrunde, Energiespeicherelemente bereitzustellen, die sich durch einen Verbundkörper aus Elektroden und gegebenenfalls einem oder mehreren Separatoren auszeichnen, der leichter mittels besagter Kontaktplatten kontaktierbar ist.

Diese Aufgabe wird durch das Energiespeicherelement mit den Merkmalen des unabhängigen Anspruchs 1 gelöst. Auch das Verfahren mit den Merkmalen des Anspruchs 10 trägt zur Lösung der Aufgabe bei. Bevorzugte Ausführungsformen der Erfindung sind in den abhängigen Ansprüchen definiert.

### Erfindungsgemäßes Energiespeicherelement

Das erfindungsgemäße Energiespeicherelement weist stets die unmittelbar folgenden Merkmale a. bis h. auf:
a. Es umfasst eine Kathode und eine Anode, die Teile eines Verbundkörpers sind, in dem sie, getrennt durch eine Separator- oder Festelektrolytschicht, in der Sequenz Kathode / Separator- oder Festelektrolytschicht / Anode vorliegen,
b. die Kathode umfasst einen Kathodenstromkollektor und ein positives Elektrodenmaterial,
c. der Kathodenstromkollektor weist
   - einen Hauptbereich, der beidseitig mit einer Schicht aus dem positiven Elektrodenmaterial beladen ist, sowie
   - einen freien Randstreifen, der sich entlang eines Rands des Kathodenstromkollektors erstreckt und der nicht mit dem positiven Elektrodenmaterial beladen ist, auf,
d. die Anode umfasst einen Anodenstromkollektor und ein negatives Elektrodenmaterial,
e. der Anodenstromkollektor weist
   - einen Hauptbereich, der beidseitig mit einer Schicht aus dem negativen Elektrodenmaterial beladen ist, sowie
   - einen freien Randstreifen, der sich entlang eines Rands des Anodenstromkollektors erstreckt und der nicht mit dem negativen Elektrodenmaterial beladen ist, auf,
f. die Kathode und die Anode sind derart ausgebildet und/oder innerhalb des Elektroden-Separator-Verbunds derart zueinander angeordnet, dass der freie Randstreifen des Kathodenstromkollektors aus einer Seite des Verbundkörpers und der freie Randstreifen des Anodenstromkollektors aus einer anderen Seite des Verbundkörpers austritt, und
g. das Energiespeicherelement umfasst ein erstes Kontaktblech, das mit einem der freien Randstreifen in unmittelbarem Kontakt steht, und ein zweites Kontaktblech, das mit dem anderen der freien Randstreifen in unmittelbarem Kontakt steht, und
   wobei
h. mindestens einer der mit einem der Kontaktbleche in unmittelbarem Kontakt stehende Randstreifen in Folge einer Faltung und/oder eines Aufrollvorgangs und eines Kalandriervorgangs eine Dicke aufweist, welche der Dicke der dazugehörigen Kathode oder Anode in dem angrenzenden, beidseitig mit Elektrodenmaterial beschichteten Hauptbereich entspricht.

Das erfindungsgemäße Energiespeicherelement zeichnet sich also besonders dadurch aus, dass es Stromkollektoren aufweist, deren freie Randstreifen einem Umformvorgang unterworfen wurden. Dies ermöglicht eine bessere Anbindung der Stromkollektoren an die Kontaktbleche, was wiederum die thermische Anbindung der Elektroden ans Gehäuse sowie den Innenwiderstand der Zelle absenken kann. Darüber hinaus ist auch das Risiko eines internen Kurzschlusses vermindert, da der gefaltete oder gerollte Randstreifen des Stromkollektors eine unkontrollierte Stauchung des Randstreifens beim Aufpressen einer Kontaktplatte erschwert oder sogar verhindert.

### Zylindrische Ausführungsform

Das erfindungsgemäße Energiespeicherelement kann als zylindrische Rundzelle oder auch prismatisch ausgebildet sein. In der zylindrischen Ausführungsform weist es die unmittelbar folgenden Merkmale a. bis e. auf:
a. Die Elektroden und die Stromkollektoren sowie die Schichten aus den Elektrodenmaterialien sind bandförmig ausgebildet,
b. Es umfasst mindestens einen bandförmigen Separator oder mindestens eine bandförmige Festelektrolytschicht,
c. der Verbundkörper liegt in Form eines zylindrischen Wickels vor, in dem die Elektroden und der mindestens eine Separator spiralförmig um eine Wickelachse herum aufgewickelt vorliegen, wobei der Verbundkörper eine erste und eine zweite endständige Stirnseite und einen Wickelmantel umfasst und der freie Randstreifen des Kathodenstromkollektors aus der ersten Stirnseite und der freie Randstreifen des Anodenstromkollektors aus der zweiten Stirnseite austritt,
d. Es umfasst ein zylindrisches Gehäuse, insbesondere ein zylindrisches Metallgehäuse, umfassend einen umlaufenden Gehäusemantel und an den Stirnseiten einen kreisförmigen Boden und einen Deckel, und
e. In dem Gehäuse ist der als Wickel ausgebildete Verbundkörper axial ausgerichtet, so dass der Wickelmantel an der Innenseite des umlaufenden Gehäusemantels anliegt.

Der Verbundkörper umfasst in dieser Ausführungsform bevorzugt einen bandförmigen Separator oder zwei bandförmige Separatoren, der oder die jeweils einen ersten und einen zweiten Längsrand sowie zwei Endstücke aufweisen.

Die Kontaktbleche sitzen in dieser Ausführungsform bevorzugt flach auf den beiden Stirnseiten auf.

Besonders bevorzugt zeichnet sich das erfindungsgemäße Energiespeicherelement in dieser Ausführungsform durch das unmittelbar folgende Merkmal a. aus:
a. Das Metallgehäuse umfasst ein becherförmiges, zylindrisch ausgebildetes Gehäuseteil mit einer endständigen Öffnung und ein Deckelbauteil, das die endständige Öffnung des becherförmig ausgebildeten Gehäuseteils verschließt.

Bevorzugt weist das Deckelbauteil einen kreisförmigen Umfang auf und ist derart in der kreisförmigen Öffnung des becherförmig ausgebildeten Gehäuseteils angeordnet, dass der Rand entlang einer umlaufenden Kontaktzone an der Innenseite des becherförmig ausgebildeten Gehäuseteils anliegt, wobei der Rand des Deckelbauteils mit dem becherförmig ausgebildeten Gehäuseteil über eine umlaufende Schweißnaht verbunden ist. In diesem Fall weisen die beiden Gehäuseteile bevorzugt die gleiche Polarität auf, sind also elektrisch entweder mit einer positiven oder einer negativen Elektrode gekoppelt. Das Gehäuse umfasst in diesem Fall noch eine Poldurchführung, die zur elektrischen Kontaktierung der nicht elektrisch mit dem Gehäuse verbundenen Elektrode dient.

In einer alternativen Ausführungsform ist auf den Rand des Deckelbauteils eine elektrisch isolierende Dichtung aufgezogen, die das Deckelbauteil von dem becherförmigen Gehäuseteil elektrisch trennt. In diesem Fall ist das Gehäuse meist durch einen Crimp-Verschluss abgedichtet.

Bevorzugt liegt die Höhe als zylindrische Rundzelle ausgebildeter Energiespeicherelemente im Bereich von 50 mm bis 150 mm. Der Durchmesser der zylindrischen Rundzellen liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Der Anodenstromkollektor, der Kathodenstromkollektor und der Separator oder die Separatoren weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Die Kontaktbleche weisen in dieser Ausführungsform bevorzugt eine kreisförmige Grundform auf.

In einigen bevorzugten Varianten der zylindrischen Ausführungsform zeichnet sich das erfindungsgemäße Energiespeicherelement durch mindestens eines der unmittelbar folgenden Merkmale a. bis d. aus:
a. Die bandförmige positive Elektrode und somit auch der aus der ersten Stirnseite austretende freie Randstreifen des Kathodenstromkollektors umfasst in dem Wickel eine radiale Abfolge benachbarter Windungen.
b. Jede der Windungen umfasst einen Abschnitt des in Folge der Faltung und/oder des Aufrollvorgangs verdickten Randstreifens.
c. Bei benachbarten Windungen stehen die Abschnitte des verdickten Randstreifens in unmittelbarem Kontakt zueinander.
d. Der freie Randstreifen des Kathodenstromkollektors bildet in Blickrichtung senkrecht auf die erste Stirnseite eine durchgehende Metallschicht aus, die mindestens 80% der Stirnseite abdeckt.

Bevorzugt sind die unmittelbar vorstehenden Merkmale a. bis c., besonders bevorzugt sogar die Merkmale a. bis d., in Kombination miteinander realisiert.

Diese Ausführungsform ist besonders vorteilhaft. Im Idealfall ist die durchgehende Metallschicht eine geschlossene Schicht, die die erste Stirnseite vollständig bedeckt.

Die bei der Herstellung des Wickels gebildeten benachbarten Windungen weisen unterschiedliche Durchmesser auf. Innenliegende Windungen haben stets einen kleineren Durchmesser als außenliegende, oder mit anderen Worten, der Durchmesser des Wickels nimmt mit jeder Windung des Wickels nach außen hin zu.

In einigen weiteren besonders bevorzugten Varianten der zylindrischen Ausführungsform zeichnet sich das erfindungsgemäße Energiespeicherelement durch mindestens eines der unmittelbar folgenden Merkmale a. bis d. aus:
a. Die bandförmige negative Elektrode und somit auch der aus der zweiten Stirnseite austretende freie Randstreifen des Anodenstromkollektors umfasst in dem Wickel eine radiale Abfolge benachbarter Windungen.
b. Jede der Windungen umfasst einen Abschnitt des in Folge der Faltung und/oder des Aufrollvorgangs verdickten Randstreifens.
c. Bei benachbarten Windungen stehen die Abschnitte des verdickten Randstreifens in unmittelbarem Kontakt zueinander.
d. Der freie Randstreifen des Anodenstromkollektors bildet in Blickrichtung senkrecht auf die zweite Stirnseite eine durchgehende Metallschicht aus, die mindestens 80 % der Stirnseite abdeckt.

Auch hier ist es bevorzugt, dass die unmittelbar vorstehenden Merkmale a. bis c., besonders bevorzugt sogar die Merkmale a. bis d., in Kombination miteinander realisiert sind.

### Prismatische Ausführungsform

In der prismatischen Ausführungsform zeichnet sich das erfindungsgemäße Energiespeicherelement durch die unmittelbar folgenden Merkmale a. bis d. aus:
a. Der Verbundkörper liegt in Form eines prismatischen Stapels vor, in dem die Kathode und die Anode gemeinsam mit weiteren Kathoden und Anoden gestapelt vorliegen.
b. Die Elektroden und die Stromkollektoren sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator oder mindestens einen bandförmigen oder polygonalen, insbesondere rechteckigen, Festelektrolyten,
d. Der Stapel ist von einem prismatischen Gehäuse umschlossen.

In dem Stapel sind entgegengesetzt gepolten Elektroden stets voneinander durch eine Separator- oder Festelektrolytschicht getrennt.

Das prismatische Gehäuse setzt sich bevorzugt aus einem becherförmigen Gehäuseteil mit einer endständigen Öffnung und einem Deckelbauteil zusammen. Der Boden des becherförmigen Gehäuseteils und das Deckelbauteil weisen in dieser Ausführungsform bevorzugt eine polygonale, besonders bevorzugt eine rechteckige Grundfläche, auf. Die Form der endständigen Öffnung des becherförmigen Gehäuseteils entspricht der Form des Bodens und des Deckelbauteils. Darüber hinaus umfasst das Gehäuse mehrere, bevorzugt vier, rechteckige Seitenteile, die den Boden und das Deckelbauteil miteinander verbinden.

Die Separatorschichten können von mehreren Separatoren gebildet werden, die jeweils zwischen benachbarten Elektroden angeordnet sind. Es ist aber auch möglich, dass ein bandförmiger Separator die Elektroden des Stapels voneinander separiert. Im Falle mehrerer Separatoren zwischen den Anoden und Kathoden weisen die Separatoren bevorzugt ebenfalls eine polygonale, insbesondere rechteckige, Grundfläche auf.

Die Kontaktbleche weisen in dieser Ausführungsform bevorzugt eine rechteckige Grundform auf.

In einigen bevorzugten Varianten der prismatischen Ausführungsform zeichnet sich das erfindungsgemäße Energiespeicherelement durch mindestens eines der unmittelbar folgenden Merkmale a. bis d. aus:
a. Jede der Kathoden des Stapels ist durch den in Folge der Faltung und/oder des Aufrollvorgangs verdickten Randstreifen gekennzeichnet.
b. Jede der Anoden des Stapels ist durch den in Folge der Faltung und/oder des Aufrollvorgangs verdickten Randstreifen gekennzeichnet.
c. Die freien Randstreifen der Kathodenstromkollektoren der Kathoden des Stapels treten aus einer Seite des Stapels aus und stehen mit dem ersten Kontaktblech in unmittelbarem Kontakt.
d. Die freien Randstreifen der Anodenstromkollektoren der Anoden des Stapels treten aus einer anderen Seite des Stapels aus und stehen mit dem zweiten Kontaktblech in unmittelbarem Kontakt.

Bevorzugt sind die unmittelbar vorstehenden Merkmale a. und c. sowie b. und d. in Kombination miteinander realisiert. Besonders bevorzugt sind die Merkmale a. bis d., in Kombination miteinander realisiert.

In weiteren bevorzugten Varianten der prismatischen Ausführungsform zeichnet sich das erfindungsgemäße Energiespeicherelement durch mindestens eines der unmittelbar folgenden Merkmale a. bis c. aus:
a. Die freien Randstreifen der Kathodenstromkollektoren sind parallel zueinander angeordnet.
b. Von den freien Randstreifen der Kathodenstromkollektoren stehen benachbarte Randstreifen in unmittelbarem Kontakt zueinander.
c. Die freien Randstreifen der Kathodenstromkollektoren bilden in Blickrichtung senkrecht auf die Seite des Stapels, aus der sie austreten, eine durchgehende Metallschicht aus, die mindestens 80 % der Seite vollständig abdeckt.

Bevorzugt sind die unmittelbar vorstehenden Merkmale a. und b., besonders bevorzugt sogar die Merkmale a. bis c., in Kombination miteinander realisiert.

In weiteren bevorzugten Varianten der prismatischen Ausführungsform zeichnet sich das erfindungsgemäße Energiespeicherelement durch mindestens eines der unmittelbar folgenden Merkmale a. bis c. aus:
a. Die freien Randstreifen der Anodenstromkollektoren sind parallel zueinander angeordnet.
b. Von den freien Randstreifen der Anodenstromkollektoren stehen benachbarte Randstreifen in unmittelbarem Kontakt zueinander.
c. Die freien Randstreifen der Anodenstromkollektoren bilden in Blickrichtung senkrecht auf die Seite des Stapels, aus der sie austreten, eine durchgehende Metallschicht aus, die mindestens 80% der Seite vollständig abdeckt.

Bevorzugt sind die unmittelbar vorstehenden Merkmale a. und b., besonders bevorzugt sogar die Merkmale a. bis c., in Kombination miteinander realisiert.

### Bevorzugte elektrochemische Ausführungsform

In einer weiteren besonders bevorzugten Ausführungsform der Erfindung zeichnet sich das erfindungsgemäße Energiespeicherelement durch eines der folgenden Merkmale aus:
a. Das Energiespeicherelement ist eine Lithium-Ionen-Zelle.
b. Das Energiespeicherelement umfasst eine Lithium-Ionen-Zelle.

Merkmal a. bezieht sich insbesondere auf die beschriebene Ausführungsform des erfindungsgemäßen Energiespeicherelements als zylindrische Rundzelle. In dieser Ausführungsform umfasst das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Weiterhin sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 90000 mAh. Mit dem Formfaktor von 21 x 70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen des Separators und des Festelektrolyten

Bevorzugt werden der Separator oder die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

Bei dem Festelektrolyten handelt es sich beispielsweise um einen Polymerfestkörperelektrolyten basierend auf einem Polymer-Leitsalzkomplex, der einphasig ohne jegliche Flüssigkomponente vorliegt. Als Polymermatrix kann ein Polymerfestkörperelektrolyt Polyacrylsäure (PAA), Polyethylenglycol (PEG) oder Polymethylmethacrylat (PMMA) aufweisen. In diesen können Lithium-Leitsalze wie beispielsweise Lithium-bis-(trifluoromethan)sulfonylimid (LiTFSI), Lithiumhexafluorophosphat (LiPF₆) und Lithiumtetrafluoroborat (LiBF₄) gelöst vorliegen.

### Bevorzugte Struktur eines als Wickel ausgebildeten Verbundkörpers

In dem als Wickel ausgebildeten Verbundkörper liegen die bandförmige Anode, die bandförmige Kathode und der oder die bandförmigen Separatoren bevorzugt spiralförmig aufgewickelt vor. Zur Herstellung des Verbundkörpers werden die bandförmigen Elektroden gemeinsam mit dem oder den bandförmigen Separatoren einer Wickelvorrichtung zugeführt und bevorzugt in dieser um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle eines Energiespeicherelements auf Basis von Lithium-Ionen-Technologie eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle eines Energiespeicherelements auf Basis von Lithium-Ionen-Technologie insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Im Fall der beschriebenen Konfiguration des Energiespeicherelements als zylindrische Rundzelle ist es bevorzugt, dass die Längsränder des oder der Separatoren die Stirnseiten des als Wickel ausgebildeten Verbundkörpers bilden.

Im Fall der beschriebenen prismatischen Konfiguration des Energiespeicherelements ist es bevorzugt, dass die Ränder des oder der Separatoren die Seiten des Stapels bilden, aus denen die freien Randstreifen der Stromkollektoren hervortreten.

Es ist weiterhin bevorzugt, dass die aus den endständigen Stirnseiten des Wickels oder Seiten des Stapels austretenden freien Randstreifen der Stromkollektoren nicht mehr als 5500 µm, bevorzugt nicht mehr als 4000 µm, aus den Stirnseiten oder den Seiten herausragen.

Besonders bevorzugt ragt der freie Randstreifen des Anodenstromkollektors aus der Seite des Stapels oder der Stirnseite des Wickels nicht mehr als 3000 µm, besonders bevorzugt nicht mehr als 2000 µm, heraus. Besonders bevorzugt ragt der freie Randstreifen des Kathodenstromkollektors aus der Seite des Stapels oder der Stirnseite des Wickels nicht mehr als 4000 µm, besonders bevorzugt nicht mehr als 3000 µm, heraus.

### Bevorzugte Ausführungsformen des ersten Kontaktblechs / Anbindung des ersten Kontaktblechs an den Anodenstromkollektor

Das erste Kontaktblech ist bevorzugt mit Anodenstromkollektor elektrisch verbunden. Besonders bevorzugt ist es mit dem freien Randstreifen des Anodenstromkollektors unmittelbar durch Verschweißung verbunden.

Zusätzlich oder in einer alternativen Ausführungsform kann das erste Kontaktblech mit dem freien Randstreifen des Anodenstromkollektors aber auch mechanisch, beispielsweise durch eine Pressverbindung oder eine Klemmverbindung oder eine Federverbindung, verbunden sein.

In einer besonders bevorzugten Ausführungsform der Erfindung zeichnet sich das erste Kontaktblech durch mindestens eines der unmittelbar folgenden Merkmale a. oder b. aus:
a. Das Kontaktblech besteht aus Nickel oder Kupfer oder Titan oder eine Nickel- oder Kupfer- oder Titanlegierung oder Edelstahl.
b. Das Kontaktblech besteht aus dem gleichen Material wie der Anodenstromkollektor.

Es ist bevorzugt, dass die unmittelbar vorstehenden Merkmale a. und b. in Kombination miteinander realisiert sind.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

In einer weiteren besonders bevorzugten Ausführungsform der Erfindung zeichnet sich das erste Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine bevorzugt rechteckige Platte.
d. Das Kontaktblech ist derart dimensioniert, dass es mindestens 60 %, bevorzugt mindestens 70 %, besonders bevorzugt mindestens 80 %, der Seite oder Stirnseite, aus der der mit ihm verbundene freie Randstreifen des Anodenstromkollektors heraustritt, abdeckt.
e. Das Kontaktblech weist mindestens eine Durchbrechung, insbesondere mindestens ein Loch und/oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem freien Randstreifen des Anodenstromkollektors aufsitzt.
g. Das Kontaktblech ist im Bereich der Sicke mit dem freien Randstreifen des Anodenstromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management des erdungsgemäßen Energiespeicherelements von Bedeutung. Je größer die Abdeckung ist, desto eher ist es möglich, den ersten Rand des Anodenstromkollektors möglichst über seine gesamte Länge zu kontaktieren. Im Verbundkörper gebildete Wärme kann so gut über das Kontaktblech abgeführt werden.

Die mindestens eine Durchbrechung in dem Kontaktblech kann beispielsweise zweckmäßig sein, um den Verbundkörper mit einem Elektrolyten tränken zu können.

### Bevorzugte Ausführungsformen des zweiten Kontaktblechs / Anbindung des zweiten Kontaktblechs an den Kathodenstromkollektor

Das zweite Kontaktblech ist bevorzugt mit dem Kathodenstromkollektor elektrisch verbunden. Besonders bevorzugt ist es mit dem freien Randstreifen des Kathodenstromkollektors unmittelbar durch Verschweißung verbunden.

In einer alternativen Ausführungsform kann das zweite Kontaktblech mit dem freien Randstreifen des Kathodenstromkollektors aber auch mechanisch, beispielsweise durch eine Pressverbindung, eine Federverbindung oder eine Klemmverbindung, verbunden sein.

In einer besonders bevorzugten Ausführungsform der Erfindung zeichnet sich das erfindungsgemäße Energiespeicherelement durch das unmittelbar folgende Merkmal a. aus:
a. Das zweite Kontaktblech besteht aus Aluminium oder aus einer Aluminiumlegierung.

Das Kontaktblech ist entweder mit dem Gehäuse elektrisch verbunden oder aber mit einem Kontaktpol, der durch das Gehäuse geführt und gegenüber dem Gehäuse elektrisch isoliert ist. Der elektrische Kontakt kann hierbei durch unmittelbar Verschweißung oder eine mechanische Verbindung realisiert sein. Gegebenenfalls kann die elektrische Verbindung auch über einen separaten elektrischen Leiter bestehen.

Das zweite Kontaktblech ist bevorzugt, abgesehen von seiner materiellen Beschaffenheit, ähnlich dem auf dem freien Randstreifen des Anodenstromkollektors aufsitzenden Kontaktblech ausgebildet. Es zeichnet sich bevorzugt durch mindestens eines der unmittelbar folgenden Merkmale a. bis g. aus:
a. Das zweite Kontaktblech weist eine bevorzugt gleichmäßige Dicke im Bereich von 50 µm bis 600 µm, bevorzugt im Bereich von 150 µm bis 350 µm, auf.
b. Das zweite Kontaktblech weist zwei sich gegenüberliegenden Flachseiten auf und erstreckt sich im Wesentlichen nur in einer Dimension.
c. Das zweite Kontaktblech ist eine Scheibe oder eine bevorzugt rechteckige Platte.
d. Das zweite Kontaktblech ist derart dimensioniert, dass es mindestens 60 %, bevorzugt mindestens 70 %, besonders bevorzugt mindestens 80 %, der Seite oder Stirnseite, aus der der freien Randstreifen des Kathodenstromkollektors heraustritt, abdeckt.
e. Das zweite Kontaktblech weist mindestens eine Durchbrechung, insbesondere mindestens ein Loch und oder mindestens einen Schlitz, auf.
f. Das zweite Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem freien Randstreifen des Kathodenstromkollektors aufsitzt.
g. Das zweite Kontaktblech ist im Bereich der Sicke mit dem freien Randstreifen des Kathodenstromkollektors verschweißt, insbesondere über eine oder mehrere in der Sicke angeordnete Schweißnähte.

Auch hier ist es besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind auch hier alle Merkmale a. bis g. in Kombination miteinander realisiert.

Die Anbindung bzw. Anschweißung des freien Randstreifens des Kathodenstromkollektors an das zweite Kontaktblech ist bevorzugt analog zur oben beschriebenen Anbindung des freien Randstreifens des Anodenstromkollektors realisiert, also besonders bevorzugt über eine Verschweißung im Bereich der Sicke.

In bevorzugten Ausführungsformen ist das zweite Kontaktblech unmittelbar mit dem Boden des becherförmigen Gehäuseteils oder einem Teil des Bodens verschweißt. In weiteren bevorzugten Ausführungsformen ist das zweite Kontaktblech über einen separaten Stromleiter mit dem Boden des becherförmigen Gehäuseteils verbunden. In letzterem Fall ist es bevorzugt, dass der separate Stromleiter sowohl mit dem Boden des becherförmigen Gehäuseteils als auch mit dem zweiten Kontaktblech verschweißt ist. Der separate Stromleiter besteht bevorzugt aus Aluminium oder einer Aluminiumlegierung.

### Bevorzugte Ausgestaltung der Gehäuseteile

In einer weiteren besonders bevorzugten Ausführungsform der Erfindung zeichnet sich das erfindungsgemäße Energiespeicherelement durch mindestens eines der unmittelbar folgenden Merkmale a. und b. aus:
a. Das becherförmig ausgebildete Gehäuseteil besteht aus Aluminium, Edelstahl oder einem vernickelten Stahl.
b. Das Deckelbauteil besteht aus Aluminium, Edelstahl oder einem vernickelten Stahl.

Besonders bevorzugt sind die unmittelbar vorstehenden Merkmale a. und b. in Kombination realisiert.

In einigen Ausführungsformen ist eine direkte Anbindung des freien Randstreifens des Kathodenstromkollektors an das Gehäuse wünschenswert. Zu diesem Zweck kann der freie Randstreifen beispielsweise mittels eines Lasers an den Boden des becherförmig ausgebildeten Gehäuseteils geschweißt werden. Der Boden des becherförmig ausgebildeten Gehäuseteils dient in diesem Fall als zweite Kontaktplatte.

Umgekehrt kann es in einigen Ausführungsformen vorgesehen sein, dass die erste Kontaktplatte als Deckelbauteil dient, also als Teil des Gehäuses dient.

### Bevorzugte Ausgestaltung der Elektroden

In einer weiteren besonders bevorzugten Ausführungsform der Erfindung zeichnet sich das erfindungsgemäße Energiespeicherelement durch eines der unmittelbar folgenden Merkmale a. oder b. aus:
a. Das erfindungsgemäße Energiespeicherelement ist als zylindrische Rundzelle ausgebildet und seine Elektroden weisen eine Dicke im Bereich von 40 µm bis 300 µm, bevorzugt im Bereich von 40 µm bis 100 µm, auf.
b. Das erfindungsgemäße Energiespeicherelement ist prismatisch ausgebildet und seine Elektroden weisen eine Dicke im Bereich von 40 µm bis 1000 µm, bevorzugt eine Dicke > 100 µm bis maximal 300 µm, auf.

### Erfindungsgemäßes Verfahren

Das erfindungsgemäße Verfahren dient zur Herstellung des oben beschriebenen Energiespeicherelements, insbesondere eines Energiespeicherelements mit den folgenden Merkmalen:
a. Es umfasst eine Kathode und eine Anode, die Teile eines Verbundkörpers sind, in dem sie, getrennt durch eine Separator- oder Festelektrolytschicht, in der Sequenz Kathode / Separator- oder Festelektrolytschicht / Anode vorliegen,
b. die Kathode umfasst einen Kathodenstromkollektor und ein positives Elektrodenmaterial,
c. der Kathodenstromkollektor weist
   - einen Hauptbereich, der beidseitig mit einer Schicht aus dem positiven Elektrodenmaterial beladen ist, sowie
   - einen freien Randstreifen, der sich entlang eines Rands des Kathodenstromkollektors erstreckt und der nicht mit dem positiven Elektrodenmaterial beladen ist, auf,
d. die Anode umfasst einen Anodenstromkollektor und ein negatives Elektrodenmaterial,
e. der Anodenstromkollektor weist
   - einen Hauptbereich, der beidseitig mit einer Schicht aus dem negativen Elektrodenmaterial beladen ist, sowie
   - einen freien Randstreifen, der sich entlang eines Rands des Anodenstromkollektors erstreckt und der nicht mit dem negativen Elektrodenmaterial beladen ist, auf,
f. die Kathode und die Anode sind derart ausgebildet und/oder innerhalb des Elektroden-Separator-Verbunds derart zueinander angeordnet, dass der freie Randstreifen des Kathodenstromkollektors aus einer Seite des Verbundkörpers und der freie Randstreifen des Anodenstromkollektors aus einer anderen Seite des Verbundkörpers austritt, und
g. das Energiespeicherelement umfasst ein erstes Kontaktblech, das mit einem der freien Randstreifen in unmittelbarem Kontakt steht, und ein zweites Kontaktblech, das mit dem anderen der freien Randstreifen in unmittelbarem Kontakt steht.

Bezüglich bevorzugter Ausführungsformen der einzelnen Komponenten des herzustellenden Energiespeicherelements wird auf die obigen Ausführungen im Zusammenhang mit der Erläuterung des erfindungsgemäßen Energiespeicherelements verwiesen.

Das Verfahren zeichnet sich insbesondere durch den folgenden Schritt aus:
h. Vor der Bildung des Verbundkörpers wird mindestens einer Randstreifen einem Faltungs- und/oder einem Aufrollvorgang sowie einem Kalandriervorgang unterworfen, in Folge dessen er eine Dicke aufweist, welche der Dicke der dazugehörigen Kathode oder Anode in dem angrenzenden, beidseitig mit Elektrodenmaterial beschichteten Hauptbereich entspricht.

In einer weiteren besonders bevorzugten Ausführungsformen zeichnet sich das Verfahren zusätzlich durch eine Kombination der unmittelbar folgenden Schritte a. bis c. aus:
a. Es werden die beidseitig mit dem Elektrodenmaterial beschichteten Stromkollektoren bereitgestellt.
b. Mindestens einer der Randstreifen mindestens eines der Stromkollektoren, bevorzugt jeweils ein Randstreifen der Stromkollektoren, wird dem Faltungs- und/oder Aufrollvorgang unterworfen, unter Erhalt mindestens eines gefalteten und/oder aufgerollten Randstreifens.
c. die beidseitig mit dem Elektrodenmaterial beschichteten Stromkollektoren werden, einschließlich des mindestens einen gefalteten und/oder aufgerollten Randstreifens einem Kalandriervorgang unterworfen.

Bei dem Kalandriervorgang werden die Schichten aus dem jeweiligen Elektrodenmaterial in den Hauptbereichen der Stromkollektoren mittels einer oder mehrerer Kalandrierwalzen bearbeitet, wobei die Schichten verdichtet werden. Ihre Dicke nimmt dabei ab. Bevorzugt werden bei dem Kalandriervorgang die Schichten aus dem Elektrodenmaterial und die gefalteten oder aufgerollten Randstreifen gleichzeitig mittels ein und derselben Kalandrierwalze behandelt.

An dieser Stelle ist es zweckmäßig, noch auf einen weiteren, besonders vorteilhaften Aspekt der Erfindung einzugehen. Ein Problem beim Kalandrieren von Schichten aus Elektrodenmaterial auf Stromkollektoren ist, dass durch die beim Kalandrieren auftretenden Drücke nicht nur die Dicke der Schichten aus dem Elektrodenmaterial abnimmt, sondern in den Hauptbereichen, die von den Schichten bedeckt sind, auch die der Stromkollektoren. Diese werden beim Durchlaufen einer Kalandrierwalze in Durchlaufrichtung gestreckt. Hingegen werden Stromkollektoren im Bereich der freien Randstreifen beim Kalandrieren klassisch nicht von den Kalandrierwalzen erfasst. Ihre Länge ändert sich dadurch nicht. Die dabei sich innerhalb des Kollektors aufbauenden Spannungen resultieren häufig in einer Krümmung der gemäß einem solchen Prozess hergestellten Elektrode (sogenannter "Camber-Effekt"). Dies kann zu Problemen beispielsweise bei der Herstellung von Elektrodenwickeln führen. Beim gleichzeitigen Kalandrieren der Schichten aus dem Elektrodenmaterial und der gemäß der vorliegenden Erfindung gefalteten oder aufgerollten Randstreifen kann es auch zu einer Streckung der Stromkollektoren in den freien Randtreifen kommen, da diese in Folge des Faltungs- und/oder des Aufrollvorgangs ja eine Dicke aufweisen können, die die Dicke der Schichten aus dem Elektrodenmaterial sogar übersteigt. Dies kann dazu führen, dass die erwähnten, sich innerhalb des Kollektors aufbauenden Spannungen nur abgeschwächt oder gar nicht auftreten.

In einer weiteren besonders bevorzugten Ausführungsformen zeichnet sich das Verfahren zusätzlich durch mindestens eines der folgenden Merkmale aus:
a. Der Faltungsvorgang umfasst eine Mehrfachfaltung.
b. Der Faltungsvorgang resultiert in einem mehrlagigen Randstreifen.
c. Dem Faltungsvorgang geht eine gezielte strukturelle Schwächung des Randstreifens voraus.

Es kann bevorzugt sein, in den freien Randstreifen eine oder mehrere langgestreckte, bevorzugt parallel zueinander verlaufende Sicken oder andere Schwächungslinien einzubringen. Diese schwächen die Struktur des Stromkollektors und erlauben gezielte Faltungen des Randstreifens entlang der Sicke oder der Sicken und parallel zu dem streifenförmigen Hauptbereich.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- **Fig. 1** eine Zeichnung eines Querschnitts durch eine Zelle des Standes der Technik, bei der eine Kontaktplatte auf einen überstehenden Rand eines Stromkollektors aufgepresst wurde,
- **Fig. 2** einen beidseitig mit Elektrodenmaterial beschichteten Kathodenstromkollektor (Draufsicht von oben sowie im Querschnitt),
- **Fig. 3** einen beidseitig mit Elektrodenmaterial beschichteten Anodenstromkollektor (Draufsicht von oben sowie im Querschnitt),
- **Fig. 4** eine Elektrode für ein erfindungsgemäßes Energiespeicherelement, deren Randstreifen in Folge eine Aufrollvorgangs eine Dicke aufweist, die der Dicke der Elektrode in dem beidseitig mit Elektrodenmaterial beschichteten Hauptbereich entspricht (Querschnittsdarstellung),
- **Fig. 5** eine Elektrode für ein erfindungsgemäßes Energiespeicherelement, deren Randstreifen in Folge einer Mehrfachfaltung eine Dicke aufweist, die ca. das zweifache der Dicke der Elektrode in dem beidseitig mit Elektrodenmaterial beschichteten Hauptbereich entspricht (Querschnittsdarstellung),
- **Fig. 6** die Herstellung einer bevorzugten Ausführungsform einer Elektrode für ein erfindungsgemäßes Energiespeicherelement (Querschnittsdarstellungen),
- **Fig. 7** einen Schnitt durch einige Windungen eines zylindrischen Verbundkörpers, der durch spiralförmiges Aufwickeln einer Kathode und einer Anode gebildet wurde,
- **Fig. 8** einen Schnitt durch einige Windungen eines weiteren zylindrischen Verbundkörpers, der durch spiralförmiges Aufwickeln einer Kathode und einer Anode gebildet wurde, und
- **Fig. 9** ein Energiespeicherelement gemäß der Erfindung, umfassend einen prismatischen Verbundkörper und ein Gehäuse dafür, gleichfalls im Querschnitt.

### DETAILLIERTE BESCHREIBUNG DER AUSFÜHRUNGSBEISPIELE

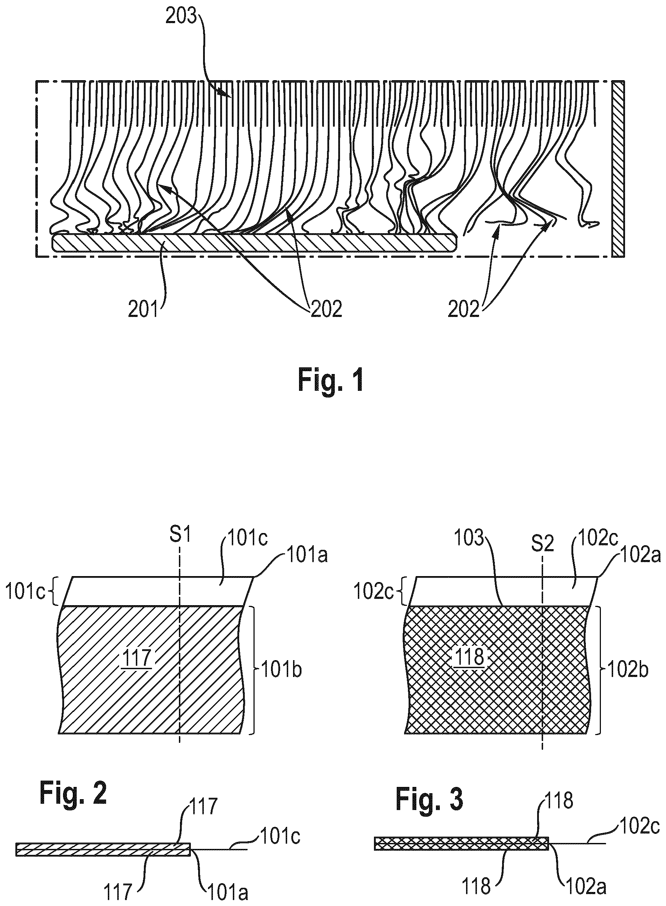

**Fig. 1** illustriert das Resultat eines Aufpressens einer Kontaktplatte 201 auf einen überstehenden Rand 202 eines Stromkollektors, der aus einer Seite eines Verbundkörpers 203 aus negativen und positiven Elektroden sowie dazwischen liegenden Separatoren (in der Zeichnung nicht dargestellt) austritt. Bei dem Aufpressen kam es zu einer unkontrollierten Stauchung des Rands 202 des Stromkollektors. Die Stauchung resultiert wiederum teilweise in undefinierten Faltungen, wie insbesondere im rechten Bereich des Randes 202 gut zu erkennen ist. Ein großflächiger, formschlüssiger Kontakt zwischen dem Stromkollektorrand 202 und der Kontaktplatte 201 wird dadurch erschwert.

**Fig. 2** zeigt einen bandförmigen Kathodenstromkollektor 101a, auf den eine Schicht aus einem positiven Elektrodenmaterial 117 aufgebracht ist, zum einen in einer Draufsicht von oben sowie zum anderen in einer Querschnittsdarstellung (Schnitt entlang S1). Bei dem Stromkollektor 101 handelt es sich bevorzugt um eine Aluminiumfolie.

Der bandförmige Stromkollektor 101a umfasst einen mit dem Elektrodenmaterial 117 beladenen Hauptbereich 101b und einen streifenförmigen Randstreifen 101c, der frei von Elektrodenmaterial ist.

**Fig. 3** zeigt einen bandförmigen Anodenstromkollektor 102a, auf den eine Schicht aus einem negativen Elektrodenmaterial 118 aufgebracht ist, zum einen in einer Draufsicht von oben sowie zum anderen in einer Querschnittsdarstellung (Schnitt entlang S2). Bei dem Stromkollektor 101 handelt es sich bevorzugt um eine Kupferfolie.

Der bandförmige Stromkollektor 102a umfasst einen mit dem Elektrodenmaterial 118 beladenen Hauptbereich 102b und einen streifenförmigen, materialfreien Randstreifen 102c, der frei von Elektrodenmaterial ist.

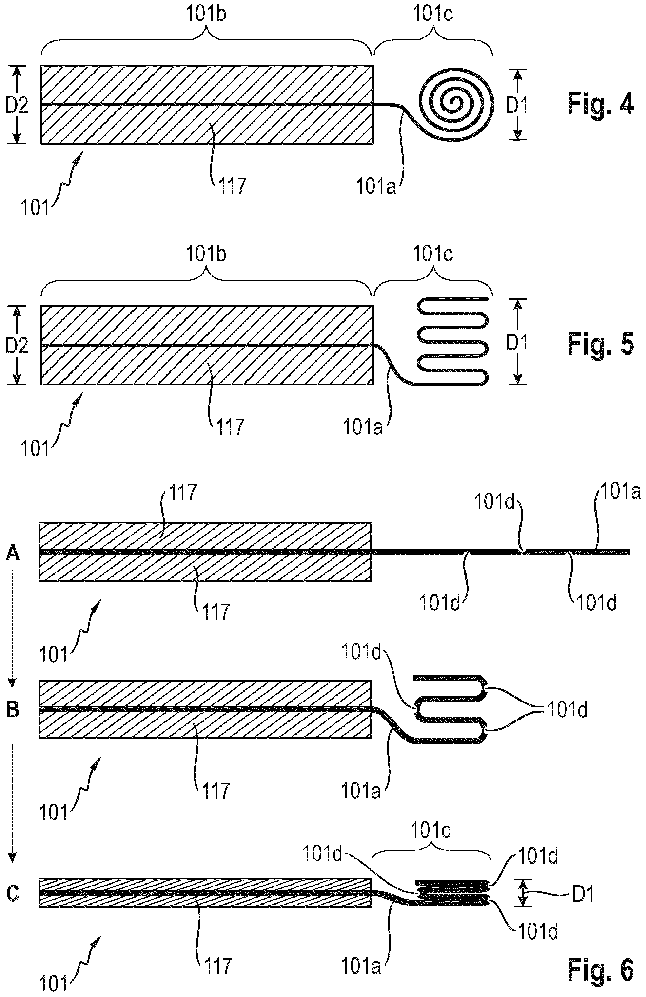

**Fig. 4** zeigt eine Ausführungsform einer positiven Elektrode 101 für ein erfindungsgemäßes Energiespeicherelement, deren Randstreifen 101c in Folge eine Aufrollvorgangs eine Dicke D1 aufweist, die der Dicke D2 der Elektrode 101 in dem beidseitig mit Elektrodenmaterial 117 beschichteten Hauptbereich 101b entspricht. Bei dem Stromkollektor 101a handelt es sich bevorzugt um eine Aluminiumfolie.

Negative Elektroden für das erfindungsgemäße Energiespeicherelement können strukturell identisch ausgebildet sein und sich lediglich durch das verwendete Elektrodenmaterial sowie durch das Material des Stromkollektors von der dargestellten positiven Elektrode unterscheiden.

**Fig. 5** zeigt eine Ausführungsform einer positiven Elektrode 101 für ein erfindungsgemäßes Energiespeicherelement, deren Randstreifen 101c in Folge einer Mehrfachfaltung eine Dicke D1 aufweist, die ca. dem Zweifachen der Dicke D2 der Elektrode 101 in dem beidseitig mit Elektrodenmaterial 117 beschichteten Hauptbereich 101b entspricht. Bei dem Stromkollektor 101a handelt es sich bevorzugt um eine Aluminiumfolie.

Negative Elektroden für das erfindungsgemäße Energiespeicherelement können strukturell identisch ausgebildet sein und sich lediglich durch das verwendete Elektrodenmaterial von der dargestellten positiven Elektrode unterscheiden.

**Fig. 6** illustriert die Herstellung einer bevorzugten Ausführungsform einer positiven Elektrode 101 für ein erfindungsgemäßes Energiespeicherelement. Hierzu wird in einem ersten Schritt A ein bandförmiger Kathodenstromkollektor 101a, auf den beidseitig eine Schicht aus einem positiven Elektrodenmaterial 117 aufgebracht ist, bereitgestellt (Darstellung im Querschnitt). Bei dem Kathodenstromkollektor 101a handelt es sich bevorzugt um eine Aluminiumfolie.

Der bandförmige Stromkollektor 101a umfasst einen mit dem Elektrodenmaterial 117 beladenen streifenförmigen Hauptbereich 101b und einen streifenförmigen Randstreifen 101c, der frei von Elektrodenmaterial ist. In den freien Randstreifen 101c sind drei langgestreckte, parallel zueinander verlaufende Sicken 101d eingerollt. Diese schwächen die Struktur des Stromkollektors 101a und erlauben gezielte Faltungen des Randstreifens 101c entlang der Sicken und parallel zu dem streifenförmigen Hauptbereich 101b. Diese Faltungen führen zu dem in B dargestellten Ergebnis.

In einem weiteren Schritt C wird der in B dargestellte mit dem Elektrodenmaterial 117 beschichtete Stromkollektor einem Kalandrierschritt unterzogen. Hierbei werden der mit Elektrodenmaterial 117 beschichteten Hauptbereich 101b und der mehrfach gefaltete Randbereich 101cauf die gleich Dicke D1 eingestellt.

Negative Elektroden für das erfindungsgemäße Energiespeicherelement können nach der gleichen Vorgehensweise hergestellt werden.

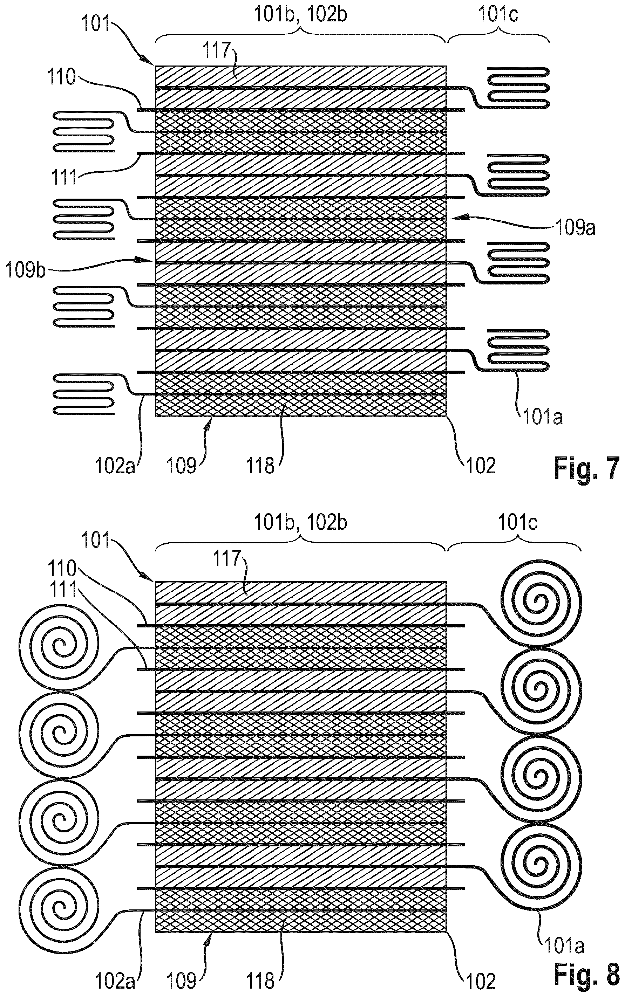

**Fig. 7** zeigt einen Schnitt durch einige Windungen eines zylindrischen Verbundkörpers 109, der durch spiralförmiges Aufwickeln einer bandförmigen Kathode 101 und einer bandförmigen Anode 102 gebildet wurde. Innerhalb des Verbundkörpers 109 sind die Kathode 101 und die Anode 102 durch zwei bandförmige Separator- oder Festelektrolytschichten 110 und 111 voneinander getrennt.

Der als zylindrische Wickel ausgebildete Verbundkörper 109 weist eine erste und eine zweite endständige Stirnseite 109a, 109b auf. Der freie Randstreifen 101c des Kathodenstromkollektors tritt aus der ersten Stirnseite 109a und der freie Randstreifen 102c des Anodenstromkollektors aus der zweiten Stirnseite 109b aus.

Der Randstreifen 101c der positiven Elektrode 101 weist in Folge einer Mehrfachfaltung eine Dicke auf, die der Dicke der Elektrode 101 in dem beidseitig mit Elektrodenmaterial 117 beschichteten Hauptbereich 101b entspricht. Bei dem Stromkollektor 101a handelt es sich bevorzugt um eine Aluminiumfolie.

Der Randstreifen 102c der negativen Elektrode 102 weist in Folge einer Mehrfachfaltung eine Dicke auf, die der Dicke der Elektrode 102 in dem beidseitig mit Elektrodenmaterial 118 beschichteten Hauptbereich 102b entspricht. Bei dem Stromkollektor 102a handelt es sich bevorzugt um eine Kupferfolie.

**Fig. 8** zeigt einen Schnitt durch einige Windungen eines zylindrischen Verbundkörpers 109, der durch spiralförmiges Aufwickeln einer bandförmigen Kathode 101 und einer bandförmigen Anode 102 gebildet wurde. Innerhalb des Verbundkörpers 109 sind die Kathode 101 und die Anode 102 durch zwei bandförmige Separator- oder Festelektrolytschichten 110 und 111 voneinander getrennt. Der Wickel setzt sich aus einer Abfolge von Windungen der positiven Elektrode 101 und der negativen Elektrode 102 zusammen.

Der als zylindrische Wickel ausgebildete Verbundkörper 109 weist eine erste und eine zweite endständige Stirnseite 109a, 109b auf. Der freie Randstreifen 101c des Kathodenstromkollektors tritt aus der ersten Stirnseite 109a und der freie Randstreifen 102c des Anodenstromkollektors aus der zweiten Stirnseite 109b aus.

Der Randstreifen 101c der positiven Elektrode 101 weist in Folge eines Aufrollvorgangs eine

Dicke auf, die dem zweifachen der Dicke der Elektrode 101 in dem beidseitig mit Elektrodenmaterial 117 beschichteten Hauptbereich 101b entspricht. Bei dem Stromkollektor 101a handelt es sich bevorzugt um eine Aluminiumfolie.

Der Randstreifen 102c der negativen Elektrode 102 weist in Folge eines Aufrollvorgangs eine Dicke auf, die dem zweifachen der Dicke der Elektrode 102 in dem beidseitig mit Elektrodenmaterial 118 beschichteten Hauptbereich 102b entspricht. Bei dem Stromkollektor 102a handelt es sich bevorzugt um eine Kupferfolie.

Der Wickel setzt sich aus einer Abfolge von Windungen der positiven Elektrode 101 und der negativen Elektrode 102 zusammen, wobei jede der Windungen der positiven Elektrode 101 einen Abschnitt des in Folge des Aufrollvorgangs verdickten Randstreifens 101c umfasst und jede der Windungen der negativen Elektrode 102 einen Abschnitt des in Folge des Aufrollvorgangs verdickten Randstreifens 102c umfasst.

Aufgrund der vergleichsweise großen Dicke der Elektroden im Bereich der Randstreifen 101c und 102c stehen bei benachbarten Windungen die Abschnitte des verdickten Randstreifens 102c in unmittelbarem Kontakt zueinander.

Die freien Randstreifen 101c und 102c der Stromkollektoren bilden so in Blickrichtung senkrecht auf die Stirnseiten 109a und 109b eine durchgehende Metallschicht aus, die einen großen Teil der jeweiligen Stirnseite abdeckt.

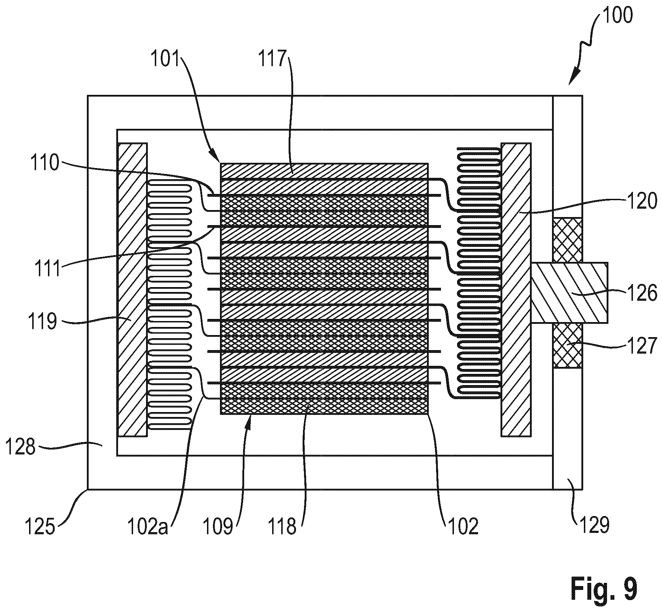

In **Fig. 9** ist ein Energiespeicherelement 100 gemäß der Erfindung dargestellt. Es umfasst den prismatischen Verbundkörper 109 und ein prismatisches Gehäuse 125. Das prismatische Gehäuse 125 setzt sich zusammen aus dem becherförmigen Gehäuseteil 128 und dem Deckelbauteil 129. Durch das Deckelbauteil 129 ist der Kontaktpol 126 geführt, der mit dem Kontaktblech 120 durch Verschweißung verbunden ist. Gegenüber dem Deckelbauteil 129 ist der Kontaktpol 126 mittels des Isolierelements 127 elektrisch isoliert. Das Kontaktblech 119 ist an den Boden des Gehäuseteils 128 geschweißt.

In dem Gehäuseteil befindet sich der Verbundkörper 109, der in Form eines prismatischen Stapels vorliegt. In dem Stapel liegen die positiven Elektroden 101, 103, 105 und 107 sowie die negativen Elektroden 102, 104, 106 und 108 gestapelt vor, jeweils getrennt durch Separatorschichten 110, 111, 112, 113, 114, 115 und 116. Die Elektroden weisen jeweils eine rechteckige Grundform auf.

Die freien Randstreifen 101c, 103c, 105c und 107c der positiven Elektroden und die freien Randstreifen 102c, 104c, 106c und 108c der negativen Elektroden sind gemäß Fig. 7 ausgebildet. Ihr Randstreifen weist also in Folge einer Mehrfachfaltung eine erhöhte Dicke auf.

Die freien Randstreifen 101c, 103c, 105c, 107c treten aus einer Seite des prismatischen Stapels aus und stehen alle mit dem Kontaktblech 119 in unmittelbarem Kontakt. Die freien Randstreifen 102c, 104c, 106c und 108c treten aus der gegenüberliegenden Seite des prismatischen Stapels aus und stehen alle mit dem Kontaktblech 120 in unmittelbarem Kontakt.

## Patentansprüche

1. Energiespeicherelement (100) mit den Merkmalen
a. Es umfasst eine Kathode (101) und eine Anode (102), die Teile eines Verbundkörpers (109) sind, in dem sie, getrennt durch eine Separator- oder Festelektrolytschicht (110), in der Sequenz Kathode (101) / Separator- oder Festelektrolytschicht (110) / Anode (102) vorliegen,
b. die Kathode (101) umfasst einen Kathodenstromkollektor (101a) und ein positives Elektrodenmaterial (117),
c. der Kathodenstromkollektor (101a) weist
• einen Hauptbereich (101b), der beidseitig mit einer Schicht aus dem positiven Elektrodenmaterial (117) beladen ist, sowie
• einen freien Randstreifen (101c), der sich entlang eines Rands des Kathodenstromkollektors (101a) erstreckt und der nicht mit dem positiven Elektrodenmaterial (117) beladen ist, auf,
d. die Anode (102) umfasst einen Anodenstromkollektor (102a) und ein negatives Elektrodenmaterial (118),
e. der Anodenstromkollektor (102a) weist
• einen Hauptbereich (101b), der beidseitig mit einer Schicht aus dem negativen Elektrodenmaterial (118) beladen ist, sowie
• einen freien Randstreifen (102c), der sich entlang eines Rands des Anodenstromkollektors (102a) erstreckt und der nicht mit dem negativen Elektrodenmaterial (118) beladen ist, auf,
f. die Kathode (101) und die Anode (102) sind derart ausgebildet und/oder innerhalb des Elektroden-Separator-Verbunds (109) derart zueinander angeordnet, dass der freie Randstreifen (101c) des Kathodenstromkollektors (101a) aus einer Seite (109a) des Verbundkörpers (109) und der freie Randstreifen (102c) des Anodenstromkollektors (102a) aus einer anderen Seite (109b) des Verbundkörpers (109) austritt, und
g. das Energiespeicherelement umfasst ein erstes Kontaktblech (119), das mit einem der freien Randstreifen (101c, 102c) in unmittelbarem Kontakt steht, und ein zweites Kontaktblech (120), das mit dem anderen der freien Randstreifen (101c, 102c) in unmittelbarem Kontakt steht, und
wobei
h. mindestens einer der mit einem der Kontaktbleche (119, 120) in unmittelbarem Kontakt stehende Randstreifen (101c, 102c) in Folge einer Faltung und/oder eines Aufrollvorgangs und eines Kalandriervorgangs eine Dicke aufweist, welche der Dicke der dazugehörigen Kathode (101) oder Anode (102) in dem angrenzenden, beidseitig mit Elektrodenmaterial (117, 118) beschichteten Hauptbereich (101b, 102b) entspricht.

2. Energiespeicherelement nach Anspruch 1 mit den folgenden zusätzlichen Merkmalen:
a. Die Elektroden (101, 102) und die Stromkollektoren (101a, 102a) sowie die Schichten aus den Elektrodenmaterialien (117, 118) sind bandförmig ausgebildet,
b. Es umfasst mindestens einen bandförmigen Separator (110, 111) oder mindestens eine bandförmige Festelektrolytschicht (110),
c. der Verbundkörper (109) liegt in Form eines zylindrischen Wickels vor, in dem die Elektroden (101, 102) und der mindestens eine Separator (110, 111) spiralförmig um eine Wickelachse herum aufgewickelt vorliegen, wobei der Verbundkörper (109) eine erste und eine zweite endständige Stirnseite (109a, 109b) und einen Wickelmantel umfasst und der freie Randstreifen (101c) des Kathodenstromkollektors (101a) aus der ersten Stirnseite (109a) und der freie Randstreifen (102c) des Anodenstromkollektors (102a) aus der zweiten Stirnseite (109b) austritt,
d. Es umfasst ein zylindrisches Gehäuse, insbesondere ein zylindrisches Metallgehäuse, umfassend einen umlaufenden Gehäusemantel und an den Stirnseiten einen kreisförmigen Boden und einen Deckel, und
e. In dem Gehäuse ist der als Wickel ausgebildete Verbundkörper (109) axial ausgerichtet, so dass der Wickelmantel an der Innenseite des umlaufenden Gehäusemantels anliegt.

3. Energiespeicherelement nach Anspruch 2 mit mindestens einem der folgenden zusätzlichen Merkmale:
a. Die bandförmige positive Elektrode (101) und somit auch der aus der ersten Stirnseite (109a) austretende freie Randstreifen (101c) des Kathodenstromkollektors (101a) umfasst in dem Wickel eine radiale Abfolge benachbarter Windungen (160-174).
b. Jede der Windungen umfasst einen Abschnitt des in Folge der Faltung und/oder des Aufrollvorgangs verdickten Randstreifens (101c).
c. Bei benachbarten Windungen stehen die Abschnitte des verdickten Randstreifens (101c) in unmittelbarem Kontakt zueinander.
d. Der freie Randstreifen (101c) des Kathodenstromkollektors (101a) bildet in Blickrichtung senkrecht auf die erste Stirnseite (109a) eine durchgehende Metallschicht aus, die mindestens 80% der Stirnseite (109a) abdeckt.

4. Energiespeicherelement nach Anspruch 2 oder nach Anspruch 3 mit mindestens einem der folgenden zusätzlichen Merkmale:
a. Die bandförmige negative Elektrode (102) und somit auch der aus der zweiten Stirnseite (109b) austretende freie Randstreifen (102c) des Anodenstromkollektors (102) umfasst in dem Wickel eine radiale Abfolge benachbarter Windungen (141-156).
b. Jede der Windungen umfasst einen Abschnitt des in Folge der Faltung und/oder des Aufrollvorgangs verdickten Randstreifens (102c).
c. Bei benachbarten Windungen stehen die Abschnitte des verdickten Randstreifens (102c) in unmittelbarem Kontakt zueinander.
d. Der freie Randstreifen (102c) des Anodenstromkollektors (102a) bildet in Blickrichtung senkrecht auf die zweite Stirnseite (109b) eine durchgehende Metallschicht aus, die mindestens 80 % der Stirnseite (109b) abdeckt.

5. Energiespeicherelement nach Anspruch 1 mit den folgenden zusätzlichen Merkmalen:
a. Der Verbundkörper (109) liegt in Form eines prismatischen Stapels vor, in dem die Kathode (101) und die Anode (102) gemeinsam mit weiteren Kathoden (103, 105, 107) und Anoden (104, 106, 108) gestapelt vorliegen.
b. Die Elektroden (101, 102, 103, 104, 105, 106, 107 und 108) und die Stromkollektoren (101a, 102a, 103a, 104a, 105a, 106a, 107a und 108a) sowie die Schichten aus den Elektrodenmaterialien sind polygonal, insbesondere rechteckig, ausgebildet.
c. Es umfasst mindestens einen bandförmigen oder polygonalen, insbesondere rechteckigen, Separator (110, 111, 112, 113, 114, 115, 116) oder mindestens einen bandförmigen oder polygonalen, insbesondere rechteckigen, Festelektrolyten,
d. Der Stapel ist von einem prismatischen Gehäuse (125) umschlossen.

6. Energiespeicherelement nach Anspruch 5 mit mindestens einem der folgenden zusätzlichen Merkmale:
a. Jede der Kathoden (101, 103, 105, 107) des Stapels ist durch den in Folge der Faltung und/oder des Aufrollvorgangs verdickten Randstreifen (101c, 103c, 105c, 107c) gekennzeichnet.
b. Jede der Anoden (102, 104, 106, 108) des Stapels ist durch den in Folge der Faltung und/oder des Aufrollvorgangs verdickten Randstreifen (102c, 104c, 106c, 108c) gekennzeichnet.
c. Die freien Randstreifen (101c, 103c, 105c, 107c) der Kathodenstromkollektoren der Kathoden des Stapels treten aus einer Seite des Stapels aus und stehen mit dem ersten Kontaktblech (119) in unmittelbarem Kontakt.
d. Die freien Randstreifen (102c, 104c, 106c, 108c) der Anodenstromkollektoren der Anoden des Stapels treten aus einer anderen Seite des Stapels aus und stehen mit dem zweiten Kontaktblech (120) in unmittelbarem Kontakt.

7. Energiespeicherelement nach Anspruch 5 oder nach Anspruch 6 mit mindestens einem der folgenden zusätzlichen Merkmale:
a. Die freien Randstreifen (101c, 103c, 105c, 107c) der Kathodenstromkollektoren sind parallel zueinander angeordnet.
b. Von den freien Randstreifen (101c, 103c, 105c, 107c) der Kathodenstromkollektoren stehen benachbarte Randstreifen in unmittelbarem Kontakt zueinander.
c. Die freien Randstreifen (101c, 103c, 105c, 107c) der Kathodenstromkollektoren bilden in Blickrichtung senkrecht auf die Seite des Stapels, aus der sie austreten, eine durchgehende Metallschicht aus, die mindestens 80 % der Seite vollständig abdeckt.

8. Energiespeicherelement nach einem der Ansprüche 5 bis 7 mit mindestens einem der folgenden zusätzlichen Merkmale:
a. Die freien Randstreifen (102c, 104c, 106c, 108c) der Anodenstromkollektoren sind parallel zueinander angeordnet.
b. Von den freien Randstreifen (102c, 104c, 106c, 108c) der Anodenstromkollektoren stehen benachbarte Randstreifen in unmittelbarem Kontakt zueinander.
c. Die freien Randstreifen (102c, 104c, 106c, 108c) der Anodenstromkollektoren bilden in Blickrichtung senkrecht auf die Seite des Stapels, aus der sie austreten, eine durchgehende Metallschicht aus, die mindestens 80% der Seite vollständig abdeckt.

9. Energiespeicherelement nach Anspruch 1 mit den folgenden zusätzlichen Merkmalen:
a. Das erste Kontaktblech (119) ist mit dem freien Randstreifen (101c) des Kathodenstromkollektors (101a) durch Verschweißung verbunden und/oder das zweite Kontaktblech (120) ist mit dem freien Randstreifen (102c) des Anodenstromkollektors (102a) durch Verschweißung verbunden.
b. Das erste Kontaktblech (119) ist mit dem freien Randstreifen (101c) des Kathodenstromkollektors (101a) mechanisch verbunden und/oder das zweite Kontaktblech (120) ist mit dem freien Randstreifen (102c) des Anodenstromkollektors mechanisch verbunden.

10. Verfahren zur Herstellung eines Energiespeicherelements (100) mit den Merkmalen
a. Es umfasst eine Kathode (101) und eine Anode (102), die Teile eines Verbundkörpers (109) sind, in dem sie, getrennt durch eine Separator- oder Festelektrolytschicht (110), in der Sequenz Kathode (101) / Separator- oder Festelektrolytschicht (110) / Anode (102) vorliegen,
b. die Kathode (101) umfasst einen Kathodenstromkollektor (101a) und ein positives Elektrodenmaterial (117),
c. der Kathodenstromkollektor (101a) weist
• einen Hauptbereich (101b), der beidseitig mit einer Schicht aus dem positiven Elektrodenmaterial (117) beladen ist, sowie
• einen freien Randstreifen (101c), der sich entlang eines Rands des Kathodenstromkollektors (101a) erstreckt und der nicht mit dem positiven Elektrodenmaterial (117) beladen ist, auf,
d. die Anode (102) umfasst einen Anodenstromkollektor (102a) und ein negatives Elektrodenmaterial (118),
e. der Anodenstromkollektor (102a) weist
• einen Hauptbereich (102b), der beidseitig mit einer Schicht aus dem negativen Elektrodenmaterial (118) beladen ist, sowie
• einen freien Randstreifen (102c), der sich entlang eines Rands des Anodenstromkollektors (102a) erstreckt und der nicht mit dem negativen Elektrodenmaterial (118) beladen ist, auf,
f. die Kathode (101) und die Anode (102) sind derart ausgebildet und/oder innerhalb des Elektroden-Separator-Verbunds (109) derart zueinander angeordnet, dass der freie Randstreifen (101c) des Kathodenstromkollektors (101a) aus einer Seite (109a) des Verbundkörpers (109) und der freie Randstreifen (102c) des Anodenstromkollektors (102a) aus einer anderen Seite (109b) des Verbundkörpers (109) austritt, und
g. das Energiespeicherelement umfasst ein erstes Kontaktblech (119), das mit einem der freien Randstreifen (101c, 102c) in unmittelbarem Kontakt steht, und ein zweites Kontaktblech (120), das mit dem anderen der freien Randstreifen (101c, 102c) in unmittelbarem Kontakt steht,
wobei das Verfahren den folgenden Schritt umfasst:
h. Vor der Bildung des Verbundkörpers (109) wird mindestens einer Randstreifen (101c, 102c) einem Faltungs- und/oder einem Aufrollvorgang sowie einem Kalandriervorgang unterworfen, in Folge dessen er eine Dicke aufweist, welche der Dicke der dazugehörigen Kathode (101) oder Anode (102) in dem angrenzenden, beidseitig mit Elektrodenmaterial (117, 118) beschichteten Hauptbereich (101b, 102b) entspricht.

11. Verfahren nach Anspruch 10 mit der folgenden Abfolge von Schritten:
a. Es werden die beidseitig mit dem Elektrodenmaterial beschichteten Stromkollektoren (101a, 102a) bereitgestellt.
b. Mindestens einer der Randstreifen (101c, 102c) wird dem Faltungs- und/oder Aufrollvorgang unterworfen, unter Erhalt mindestens eines gefalteten und/oder aufgerollten Randstreifens.
c. die beidseitig mit dem Elektrodenmaterial beschichteten Stromkollektoren (101a, 102a) werden, einschließlich des mindestens einen gefalteten und/oder aufgerollten Randstreifens dem Kalandriervorgang unterworfen.

12. Verfahren nach Anspruch 10 oder nach Anspruch 11 mit mindestens einem der folgenden zusätzlichen Merkmale:
a. Der Faltungsvorgang umfasst eine Mehrfachfaltung.
b. Der Faltungsvorgang resultiert in einem mehrlagigen Randstreifen.
c. Dem Faltungsvorgang geht eine gezielte strukturelle Schwächung des Randstreifens voraus.

## Claims

1. Energy storage element (100) with the features
a. It comprises a cathode (101) and an anode (102) which are parts of an assembly (109) in which they are present, separated by a separator or solid electrolyte layer (110), in the sequence cathode (101) / separator or solid electrolyte layer (110) / anode (102),
b. the cathode (101) comprises a cathode current collector (101a) and a positive electrode material (117),
c. the cathode current collector (101a) has
• a main region (101b) loaded on both sides with a layer of the positive electrode material (117), and
• a free edge strip (101c) which extends along an edge of the cathode current collector (101a) and which is not loaded with the positive electrode material (117),
d. the anode (102) comprises an anode current collector (102a) and a negative electrode material (118),
e. the anode current collector (102a) has
• a main region (101b) loaded on both sides with a layer of the negative electrode material (118), and
• a free edge strip (102c) which extends along an edge of the anode current collector (102a) and which is not loaded with the negative electrode material (118),
f. the cathode (101) and the anode (102) are formed and/or arranged within the electrode-separator assembly (109) relative to one another in such a way that the free edge strip (101c) of the cathode current collector (101a) protrudes from one side (109a) of the assembly (109) and the free edge strip (102c) of the anode current collector (102a) protrudes from another side (109b) of the assembly (109), and
g. the energy storage element comprises a first contact sheet metal member (119) which is in direct contact with one of the free edge strips (101c, 102c), and a second contact sheet metal member (120) which is in direct contact with the other of the free edge strips (101c, 102c), and
wherein
h. at least one of the edge strips (101c, 102c) being in direct contact with one of the contact sheet metal members (119, 120) has, as a result of a folding and/or a rolling-up process and of a calendering process, a thickness which corresponds to the thickness of the associated cathode (101) or anode (102) in the adjacent main region (101b, 102b) coated on both sides with electrode material (117, 118).

2. Energy storage element according to claim 1 with the following additional features:
a. The electrodes (101, 102) and the current collectors (101a, 102a) as well as the layers of electrode materials (117, 118) are ribbon-shaped,
b. It comprises at least one ribbon-shaped separator (110, 111) or at least one ribbon-shaped solid electrolyte layer (110),
c. the assembly (109) is in the form of a cylindrical winding in which the electrodes (101, 102) and the at least one separator (110, 111) are spirally wound around a winding axis, wherein the assembly (109) comprises a first and a second terminal end face (109a, 109b) and a winding shell, and the free edge strip (101c) of the cathode current collector (101a) protrudes from the first end face (109a) and the free edge strip (102c) of the anode current collector (102a) protrudes from the second end face (109b),
d. It comprises a cylindrical housing, in particular a cylindrical metal housing, comprising a circumferential housing shell and, at the end faces, a circular bottom and a lid, and
e. In the housing, the assembly (109) in the form of a winding is axially aligned so that the winding shell abuts the inside of the circumferential housing shell.

3. Energy storage element according to claim 2 with at least one of the following additional features:
a. The ribbon-shaped positive electrode (101) and thus also the free edge strip (101c) of the cathode current collector (101a) protruding from the first end face (109a) comprises a radial sequence of adjacent turns (160-174) in the winding.
b. Each of the turns comprises a section of the edge strip (101c) thickened as a result of the folding and/or the winding process.
c. In adjacent turns, the sections of the thickened edge strip (101c) are in direct contact with each other.
d. The free edge strip (101c) of the cathode current collector (101a) forms a continuous metal layer in the direction perpendicular to the first end face (109a), which covers at least 80% of the end face (109a).

4. Energy storage element according to claim 2 or according to claim 3 with at least one of the following additional features:
a. The ribbon-shaped negative electrode (102) and thus also the free edge strip (102c) of the anode current collector (102) protruding from the second end face (109b) comprises a radial sequence of adjacent turns (141-156) in the winding.
b. Each of the turns comprises a section of the edge strip (102c) thickened as a result of the folding and/or the winding process.
c. In adjacent turns, the sections of the thickened edge strip (102c) are in direct contact with each other.
d. The free edge strip (102c) of the anode current collector (102a) forms a continuous metal layer in the direction perpendicular to the second end face (109b), which covers at least 80 % of the end face (109b).

5. Energy storage element according to claim 1 with the following additional features:
a. The assembly (109) is in the form of a prismatic stack in which the cathode (101) and the anode (102) are stacked together with further cathodes (103, 105, 107) and anodes (104, 106, 108).
b. The electrodes (101, 102, 103, 104, 105, 106, 107 and 108) and the current collectors (101a, 102a, 103a, 104a, 105a, 106a, 107a and 108a) as well as the layers of the electrode materials are polygonal, in particular rectangular.
c. It comprises at least one ribbon-shaped or polygonal, in particular rectangular, separator (110, 111, 112, 113, 114, 115, 116) or at least one ribbon-shaped or polygonal, in particular rectangular, solid electrolyte,
d. The stack is enclosed in a prismatic housing (125).

6. Energy storage element according to claim 5 with at least one of the following additional features:
a. Each of the cathodes (101, 103, 105, 107) of the stack is **characterized by** the edge strip (101c, 103c, 105c, 107c) thickened as a result of the folding and/or rolling process.
b. Each of the anodes (102, 104, 106, 108) of the stack is **characterized by** the edge strip (102c, 104c, 106c, 108c) thickened as a result of the folding and/or rolling process.
c. The free edge strips (101c, 103c, 105c, 107c) of the cathode current collectors of the cathodes of the stack protrude from one side of the stack and are in direct contact with the first contact sheet metal member (119).
d. The free edge strips (102c, 104c, 106c, 108c) of the anode current collectors of the anodes of the stack protrude from another side of the stack and are in direct contact with the second contact sheet metal member (120).

7. Energy storage element according to claim 5 or according to claim 6 with at least one of the following additional features:
a. The free edge strips (101c, 103c, 105c, 107c) of the cathode current collectors are arranged parallel to each other.
b. Of the free edge strips (101c, 103c, 105c, 107c) of the cathode current collectors, adjacent edge strips are in direct contact with each other.
c. The free edge strips (101c, 103c, 105c, 107c) of the cathode current collectors form a continuous metal layer in the direction perpendicular to the side of the stack from which they protrude, which completely covers at least 80 % of the side.

8. Energy storage element according to any one of claims 5 to 7, having at least one of the following additional features:
a. The free edge strips (102c, 104c, 106c, 108c) of the anode current collectors are arranged parallel to each other.
b. Of the free edge strips (102c, 104c, 106c, 108c) of the anode current collectors, adjacent edge strips are in direct contact with each other.
c. The free edge strips (102c, 104c, 106c, 108c) of the anode current collectors form a continuous metal layer in the direction perpendicular to the side of the stack from which they protrude, which completely covers at least 80% of the side.

9. Energy storage element according to claim 1 with the following additional features:
a. The first contact sheet metal member (119) is connected to the free edge strip (101c) of the cathode current collector (101a) by welding and/or the second contact sheet metal member (120) is connected to the free edge strip (102c) of the anode current collector (102a) by welding.
b. The first contact sheet metal member (119) is mechanically connected to the free edge strip (101c) of the cathode current collector (101a) and/or the second contact sheet metal member (120) is mechanically connected to the free edge strip (102c) of the anode current collector.

10. Method of manufacturing an energy storage element (100) with the features
a. It comprises a cathode (101) and an anode (102) which are parts of an assembly (109) in which they are present, separated by a separator or solid electrolyte layer (110), in the sequence cathode (101) / separator or solid electrolyte layer (110) / anode (102),
b. the cathode (101) comprises a cathode current collector (101a) and a positive electrode material (117),
c. the cathode current collector (101a) has
• a main region (101b) loaded on both sides with a layer of the positive electrode material (117), and
• a free edge strip (101c) which extends along an edge of the cathode current collector (101a) and which is not loaded with the positive electrode material (117),
d. the anode (102) comprises an anode current collector (102a) and a negative electrode material (118),
e. the anode current collector (102a) has
• a main region (102b) loaded on both sides with a layer of the negative electrode material (118), and
• a free edge strip (102c) which extends along an edge of the anode current collector (102a) and which is not loaded with the negative electrode material (118),
f. the cathode (101) and the anode (102) are formed and/or arranged within the electrode-separator assembly (109) relative to one another in such a way that the free edge strip (101c) of the cathode current collector (101a) protrudes from one side (109a) of the assembly (109) and the free edge strip (102c) of the anode current collector (102a) protrudes from another side (109b) of the assembly (109), and
g. the energy storage element comprises a first contact sheet metal member (119) which is in direct contact with one of the free edge strips (101c, 102c), and a second contact sheet metal member (120) which is in direct contact with the other of the free edge strips (101c, 102c),
wherein the method comprises the following step:
h. Before the assembly (109) is formed, at least one edge strip (101c, 102c) is subjected to a folding and/or rolling process and to a calendering process, as a result of which it has a thickness which corresponds to the thickness of the associated cathode (101) or anode (102) in the adjacent main region (101b, 102b) coated on both sides with electrode material (117, 118).

11. The method according to claim 10, comprising the following sequence of steps:
a. The current collectors (101a, 102a) coated on both sides with the electrode material are provided.
b. At least one of the edge strips (101c, 102c) is subjected to the folding and/or rolling-up process, obtaining at least one folded and/or rolled-up edge strip.
c. the current collectors (101a, 102a) coated on both sides with the electrode material, including the at least one folded and/or rolled-up edge strip, are subjected to the calendering process.

12. A method according to claim 10 or according to claim 11 comprising at least one of the following additional features:
a. The folding process comprises multiple folding.
b. The folding process results in a multilayer edge strip.
c. The folding process is preceded by a targeted structural weakening of the edge strip.

## Revendications

1. Elément de stockage d'énergie (100) avec les caractéristiques
a. il comprend une cathode (101) et une anode (102) qui font partie d'un corps composite (109), dans lequel elles sont séparées par une couche de séparateur ou d'électrolyte solide (110), dans la séquence cathode (101) / couche de séparateur ou d'électrolyte solide (110) / anode (102),
b. la cathode (101) comprend un collecteur de courant de cathode (101a) et un matériau d'électrode positive (117),
c. le collecteur de courant de cathode (101a) comporte
• une zone principale (101b), qui est chargée des deux côtés d'une couche composée du matériau d'électrode positive (117), ainsi
• qu'une bande de bord libre (101c), qui s'étend le long d'un bord du collecteur de courant de cathode (101a) et qui n'est pas chargée avec le matériau d'électrode positive (117),
d. l'anode (102) comprend un collecteur de courant d'anode (102a) et un matériau d'électrode négative (118),
e. le collecteur de courant d'anode (102a) comporte
• une zone principale (101b), qui est chargée des deux côtés avec une couche composée du matériau d'électrode négative (118), ainsi
• qu'une bande de bord libre (102c), qui s'étend le long d'un bord du collecteur de courant d'anode (102a) et qui n'est pas chargée avec le matériau d'électrode négative (118),
f. la cathode (101) et l'anode (102) sont formées et/ou disposées l'une par rapport à l'autre à l'intérieur du composite électrode-séparateur (109) de telle manière que la bande de bord libre (101c) du collecteur de courant de cathode (101a) sort d'un côté (109a) du corps composite (109) et la bande de bord libre (102c) du collecteur de courant d'anode (102a) sort d'un autre côté (109b) du corps composite (109), et
g. l'élément de stockage d'énergie comprend une première tôle de contact (119), qui est en contact direct avec une des bandes de bord libres (101c, 102c) et une deuxième tôle de contact (120) qui est en contact direct avec l'autre des bandes de bord libres (101c, 102c), et
h. au moins une des bandes de bord (101c, 102c) en contact direct avec une des tôles de contact (119, 120), présentant suite à un pliage et/ou à un processus d'enroulement et à un processus de calandrage, une épaisseur, qui correspond à l'épaisseur de la cathode (101) ou de l'anode (102) associée dans la zone principale (101b, 102b) adjacente revêtue des deux côtés d'un matériau d'électrode (117, 118).

2. Elément de stockage d'énergie selon la revendication 1 avec les caractéristiques supplémentaires suivantes :
a. les électrodes (101, 102) et les collecteurs de courant (101a, 102a) ainsi que les couches composées des matériaux d'électrode (117, 118) sont en forme de bande,
b. il comprend au moins un séparateur en forme de bande (110, 111) ou au moins une couche d'électrolyte solide en forme de bande (110),
c. le corps composite (109) se présente sous la forme d'un enroulement cylindrique, dans lequel les électrodes (101, 102) et l'au moins un séparateur (110, 111) sont enroulés en spirale autour d'un axe d'enroulement, le corps composite (109) comprenant un premier et un second côté frontal d'extrémité (109a, 109b) et une enveloppe d'enroulement et la bande de bord libre (101c) du collecteur de courant de cathode (101a) sortant du premier côté frontal (109a) et la bande de bord libre (102c) du collecteur de courant d'anode (102a) sortant du second côté frontal (109b),
d. il comprend un boîtier cylindrique, en particulier un boîtier métallique cylindrique, comprenant une enveloppe de boîtier périphérique et un fond circulaire et un couvercle sur les côtés frontaux, et
e. le corps composite (109) réalisé comme un enroulement est orienté axialement dans le boîtier de telle sorte que l'enveloppe d'enroulement repose sur le côté intérieur de l'enveloppe de boîtier périphérique.

3. Elément de stockage d'énergie selon la revendication 2 avec au moins une des caractéristiques supplémentaires suivantes :
a. L'électrode positive en forme de bande (101) et donc également la bande de bord libre (101c) du collecteur de courant de cathode (101a) sortant du premier côté frontal (109a) comprend une séquence radiale de spires adjacentes (160-174) dans l'enroulement.
b. Chacune des spires comprend une section de la bande de bord (101c) épaissie suite au pliage et/ou au processus d'enroulement.
c. Dans le cas de spires adjacentes, les sections de la bande de bord (101c) épaissie sont en contact direct les unes par rapport aux autres.
d. La bande de bord libre (101c) du collecteur de courant de cathode (101a) forme, dans la direction d'observation perpendiculairement au premier côté frontal (109a), une couche métallique continue qui recouvre au moins 80 % du côté frontal (109a).

4. Elément de stockage d'énergie selon la revendication 2 ou la revendication 3, avec au moins une des caractéristiques supplémentaires suivantes :
a. L'électrode négative en forme de bande (102) et donc également la bande de bord libre (102c) du collecteur de courant d'anode (102) sortant du second côté frontal (109b) comprend une séquence radiale de spires adjacentes (141-156) dans l'enroulement.
b. Chacune des spires comprend une section de la bande de bord (102c) épaissie suite au pliage et/ou au processus d'enroulement.
c. Dans le cas de spires adjacentes, les sections de la bande de bord (102c) épaissie sont en contact direct les unes par rapport aux autres.
d. La bande de bord libre (102c) du collecteur de courant d'anode (102a) forme, dans la direction d'observation perpendiculairement au second côté frontal (109b), une couche métallique continue qui recouvre au moins 80 % du côté frontal (109b).

5. Elément de stockage d'énergie selon la revendication 1 avec les caractéristiques supplémentaires suivantes :
a. Le corps composite (109) se présente sous la forme d'un empilement prismatique, dans lequel la cathode (101) et l'anode (102) sont empilées conjointement avec d'autres cathodes (103, 105, 107) et anodes (104, 106, 108).
b. Les électrodes (101, 102, 103, 104, 105, 106, 107 et 108) et les collecteurs de courant (101a, 102a, 103a, 104a, 105a, 106a, 107a et 108a) ainsi que les couches composées des matériaux d'électrode sont polygonales, notamment rectangulaires.
c. Il comprend au moins un séparateur (110, 111, 112, 113, 114, 115, 116) en forme de bande ou polygonal, en particulier rectangulaire, ou au moins un électrolyte solide en forme de bande ou polygonal, en particulier rectangulaire.
d. L'empilement est entouré d'un boîtier prismatique (125) .

6. Elément de stockage d'énergie selon la revendication 5 avec au moins une des caractéristiques supplémentaires suivantes :
a. Chacune des cathodes (101, 103, 105, 107) de l'empilement est **caractérisée par** la bande de bord (101c, 103c, 105c, 107c) épaissie suite au pliage et/ou au processus d'enroulement.
b. Chacune des anodes (102, 104, 106, 108) de l'empilement est **caractérisée par** la bande de bord (102c, 104c, 106c, 108c) épaissie suite au pliage et/ou au processus d'enroulement.
c. Les bandes de bord libre (101c, 103c, 105c, 107c) des collecteurs de courant de cathode des cathodes de l'empilement sortent d'un côté de l'empilement et sont en contact direct avec la première tôle de contact (119).
d. Les bandes de bord libre (102c, 104c, 106c, 108c) des collecteurs de courant d'anode des anodes de l'empilement sortent d'un autre côté de l'empilement et sont en contact direct avec la deuxième tôle de contact (120) .

7. Elément de stockage d'énergie selon la revendication 5 ou la revendication 6, avec au moins une des caractéristiques supplémentaires suivantes :
a. Les bandes de bord libre (101c, 103c, 105c, 107c) des collecteurs de courant de cathode sont disposées parallèlement les unes par rapport aux autres.
b. Parmi les bandes de bord libres (101c, 103c, 105c, 107c) des collecteurs de courant de cathode, des bandes de bord adjacentes sont en contact direct les unes par rapport aux autres.
c. Les bandes de bord libre (101c, 103c, 105c, 107c) des collecteurs de courant de cathode forment, dans la direction d'observation perpendiculairement au côté de l'empilement, duquel elles sortent, une couche métallique continue qui recouvre complètement au moins 80 % du côté.

8. Elément de stockage d'énergie selon l'une des revendications 5 à 7 avec au moins une des caractéristiques supplémentaires suivantes :
a. Les bandes de bord libre (102c, 104c, 106c, 108c) des collecteurs de courant d'anode sont disposées parallèlement les unes par rapport aux autres.
b. Parmi les bandes de bord libres (102c, 104c, 106c, 108c) des collecteurs de courant d'anode, des bandes de bord adjacentes sont en contact direct les unes par rapport aux autres.
c. Les bandes de bord libre (102c, 104c, 106c, 108c) des collecteurs de courant d'anode forment, dans la direction d'observation perpendiculairement au côté de l'empilement duquel elles sortent, une couche métallique continue qui recouvre complètement au moins 80 % du côté.

9. Elément de stockage d'énergie selon la revendication 1 avec les caractéristiques supplémentaires suivantes :
a. La première tôle de contact (119) est reliée à la bande de bord libre (101c) du collecteur de courant de cathode (101a) par soudage et/ou la deuxième tôle de contact (120) est reliée à la bande de bord libre (102c) du collecteur de courant d'anode (102a) par soudage.
b. La première tôle de contact (119) est reliée mécaniquement à la bande de bord libre (101c) du collecteur de courant de cathode (101a) et/ou la deuxième tôle de contact (120) est reliée mécaniquement à la bande de bord libre (102c) du collecteur de courant d'anode.

10. Procédé de fabrication d'un élément de stockage d'énergie (100) avec les caractéristiques
a. il comprend une cathode (101) et une anode (102) qui font partie d'un corps composite (109), dans lequel elles sont séparées par une couche de séparateur ou d'électrolyte solide (110), dans la séquence cathode (101) / couche de séparateur ou d'électrolyte solide (110) / anode (102),
b. la cathode (101) comprend un collecteur de courant de cathode (101a) et un matériau d'électrode positive (117),
c. le collecteur de courant de cathode (101a) comporte
• une zone principale (101b), qui est chargée des deux côtés d'une couche composée du matériau d'électrode positive (117), ainsi
• qu'une bande de bord libre (101c), qui s'étend le long d'un bord du collecteur de courant de cathode (101a) et qui n'est pas chargée avec le matériau d'électrode positive (117),
d. l'anode (102) comprend un collecteur de courant d'anode (102a) et un matériau d'électrode négative (118),
e. le collecteur de courant d'anode (102a) comporte
• une zone principale (102b), qui est chargée des deux côtés d'une couche composée du matériau d'électrode négative (118), ainsi
• qu'une bande de bord libre (102c), qui s'étend le long d'un bord du collecteur de courant d'anode (102a) et qui n'est pas chargée avec le matériau d'électrode négative (118),
f. la cathode (101) et l'anode (102) sont formées et/ou disposées l'une par rapport à l'autre à l'intérieur du composite électrode-séparateur (109) de telle manière que la bande de bord libre (101c) du collecteur de courant de cathode (101a) sort d'un côté (109a) du corps composite (109) et la bande de bord libre (102c) du collecteur de courant d'anode (102a) sort d'un autre côté (109b) du corps composite (109), et
g. l'élément de stockage d'énergie comprend une première tôle de contact (119), qui est en contact direct avec une des bandes de bord libres (101c, 102c) et une deuxième tôle de contact (120), qui est en contact direct avec l'autre des bandes de bord libres (101c, 102c),
le procédé comprenant l'étape suivante :
h. avant la formation du corps composite (109), au moins une bande de bord (101c, 102c) est soumise à un processus de pliage et/ou d'enroulement ainsi qu'à un processus de calandrage, ce qui lui permet de présenter une épaisseur qui correspond à l'épaisseur de la cathode (101) ou de l'anode (102) associée dans la zone principale (101b, 102b) adjacente revêtue des deux côtés d'un matériau d'électrode (117, 118).

11. Procédé selon la revendication 10 avec la séquence d'étapes suivante :
a. Les collecteurs de courant (101a, 102a) revêtus des deux côtés du matériau d'électrode sont fournis.
b. Au moins une des bandes de bord (101c, 102c) est soumise au processus de pliage et/ou d'enroulement pour obtenir au moins une bande de bord pliée et/ou enroulée.
c. Les collecteurs de courant (101a, 102a) revêtus des deux côtés du matériau d'électrode sont soumis, y compris l'au moins une bande de bord pliée et/ou enroulée, au processus de calandrage.

12. Procédé selon la revendication 10 ou la revendication 11, avec au moins une des caractéristiques supplémentaires suivantes :
a. Le processus de pliage comprend un pliage multiple.
b. Le processus de pliage aboutit à une bande de bord multicouche.
c. Le processus de pliage est précédé d'un affaiblissement structurel ciblé de la bande de bord.
